# EUROPEAN PATENT APPLICATION

(11) **EP 1 542 115 A1**
(43) Date of publication of application: **15.06.2005**
(21) Application number: 03256593.9
(22) Date of filing: 20.10.2003
(51) Int. Cl.: G06F 1/00

(54) **Prevention of unwanted process operations**

(71) Applicant: MATSUSHITA ELECTRIC INDUSTRIAL CO., LTD., Kadoma-shi, Osaka 571-8501 (JP)
(72) Inventor: Button, Gavin Paul, Berkshire RG40 2EP (GB)
(74) Representative: Dawson, Elizabeth Ann

(57) **Abstract**

In order to prevent unwanted processes executing in a computer operating system, a list of acceptable processes is stored and only processes in the list are allowed to execute. Instead of looking out for data streams known to be unacceptable, only processes previously advised to be acceptable are allowed to operate.

## Description

This document describes a computer security system and method for implementing it.

### Introduction

Mobile Terminals are offering an increasing number of services, such as Internet browsing and multimedia messaging. Many new services are being provided using the Internet Protocol (IP). The IP based Protocols used to provide these services can have design and implementation flaws that can be exploited by malicious users.

One example of an attack that can be made against an IP enabled device is a buffer overflow. Buffer overflows take advantage of common programming errors in IP based protocol implementations. If, in a protocol implementation, the length of incoming data is not calculated correctly or checked against the buffer it is copied to then the buffer could be overrun. Malicious users with knowledge of the target system could exploit this vulnerability by sending large amounts of data that overruns the buffer it is copied to. This can allow malicious code to be executed, which can be used to run processes that cause damage to the terminal or other devices.

Viruses attached to e-mails or on web pages are another example of an attack that can run be used to run malicious code on a terminal.

This document details a system for combating these and other forms of attack. Although this description is detailed from an Internet Protocol and Mobile Terminal perspective, the proposal could also be applied to non-IP based protocols and non-mobile terminals.

### Background

IP Security includes a wide range of technologies designed to keep an IP node safe. These include encryption, firewalls and authentication. None of these methods are unbreakable and when they have been breached, an additional level of security is required.

Virus checkers are used to check attachments on e-mails or web pages that may be attempting to cause damage. They do not prevent IP protocol implementation based vulnerabilities that can be exploited by attacks such as buffer overruns. Some methods have been put forward (see Existing Patents section) for detecting incoming attacks by checking data being received for a particular signature in it. This proposal defines a new security method that does not necessarily replace current techniques but could complement them by adding an additional layer of security.

Internet access security methods, such as firewalls, are usually provided at gateways between networks. For instance, on the machine that separates a business network from the Internet. In mobile networks security is also being required at the Gateway, known as the Gateway GPRS Support Node (GGSN) in a General Packet Radio Service (GPRS) or Universal Mobile Telecommunications System (UMTS) network, between the Internet and the Mobile network. Mobile networks have an additional vulnerability to fixed line networks, as it is possible that a sophisticated attacker could connect to the network over the radio interface and attack. This would bypass the security at the gateway (GGSN), so that additional security mechanisms are required on the handset itself. This proposal describes an additional security mechanism that could be used on both fixed and mobile terminals.

The following patent documents relate to the prevention of security attacks that could lead to the operation of unwanted programs:

### EP 1 081 894: System for monitoring network for cracker attack (Alma Baba Technical Res Lab Co)

A sensor in a gateway is used to detect selected attacks by various methods including ports that are being probed and finding particular sequences in incoming data. If an attack is detected the firewall is instructed to close the port for any data from the IP address of the attack.

### WO02/39273: Method for detecting buffer overflow for computer security (Corekt Security Systems Inc)

Attempts to detect buffer overflow attacks by analysing the incoming data and looking for potential attack signs such as jump instructions with illegal addresses.

### WO01/17161: System and method for using signatures to detect computer intrusions (Recourse Technologies Inc)

A system for detecting attacks using various methods including detecting of signatures, login correlations, time stamps, and analysis of file systems to detect attacks.

### WO02/101516: Method and apparatus for distributed network security (Intruvert Networks Inc)

Reads incoming data, and checks it against a database of known attack signatures.

### Summary of the Invention

The invention is based on a system that aims to detect and stop an attack as it attempts to execute. As described in the prior art, many attacks such as viruses rely on being able to detect an attack by recognising a signature in the incoming data. These attacks often operate by executing programs (or processes) on the target system. One embodiment of the invention operates by detecting processes that it does not expect to be running and terminating them before they can cause any damage.

The preferred method involves keeping a list of process names, process IDs (on most operating systems each program executing is represented by a numeric ID, the *Process ID)* and checksums of programs that are known to be safe, along with the number of concurrent executions allowed by the program. When a new program attempts to execute it is checked against this list to see if it should be allowed to start or not. In other words, instead of looking out for data streams or sequences known to be unacceptable, the present invention works by "killing" all processes unless they are previously advised to be acceptable. This method could be considered more efficient than checking all incoming data for a signature, as carried out by some virus checkers. It also does not rely on recognising a known signature, which could fail against a new attack method or new virus. The method of the invention can operate as a complementary technique to other security software such as firewalls and virus checkers.

An additional level of security may be provided to avoid the problem of unwanted programs being given "acceptable" identification data e.g. A malicious program may use an acceptable process name. Thus, an operation might be terminated if it did not have appropriate higher level authentication data, such as a checksum or digital signature.

The invention could be implemented in several ways. Following are two configuration methods, two program detection methods, and a method for adding/removing programs, described by way of example only and with reference to the accompanying drawings in which:
Figure 1 is a flowchart illustrating a first method according to the invention;
Figure 2 is a flowchart illustrating a second method according to the invention; and
Figure 3 is a schematic diagram of the system components needed for carrying out the preferred embodiment of the invention.

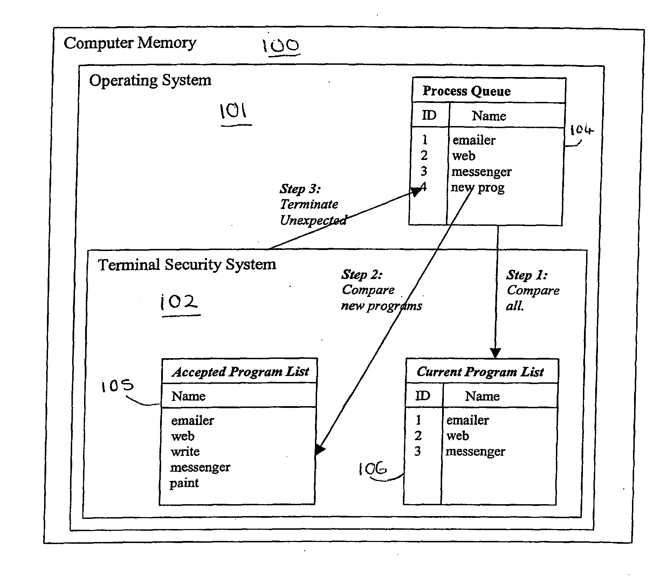

Referring firstly to figure 3, a mobile terminal has computer memory 100 including operating system 101 and, as part of the operating system a security system 102. The operating system includes a list 104 of currently executing programs. The terminal security system 102 includes a list 105 of accepted programs and a list 106 of current programs.

In order for the security system to determine which programs should be terminated, it needs to be configured prior to operation with information on accepted programs. Two methods are proposed:
- Configuration Method 1: Manual method. A user interface will allow the manufacturer of the terminal to configure its security system. The configuration information required includes the name of programs that are allowed to operate, their checksums, and the maximum number of instances that can be executed at any one time.
- Configuration Method 2: Automated method. When the terminals software is initially loaded onto the device, for a flash file system this could be during the process of creating the flash image, the list of programs and their checksums could be automatically generated by another program outside of the scope of this system.

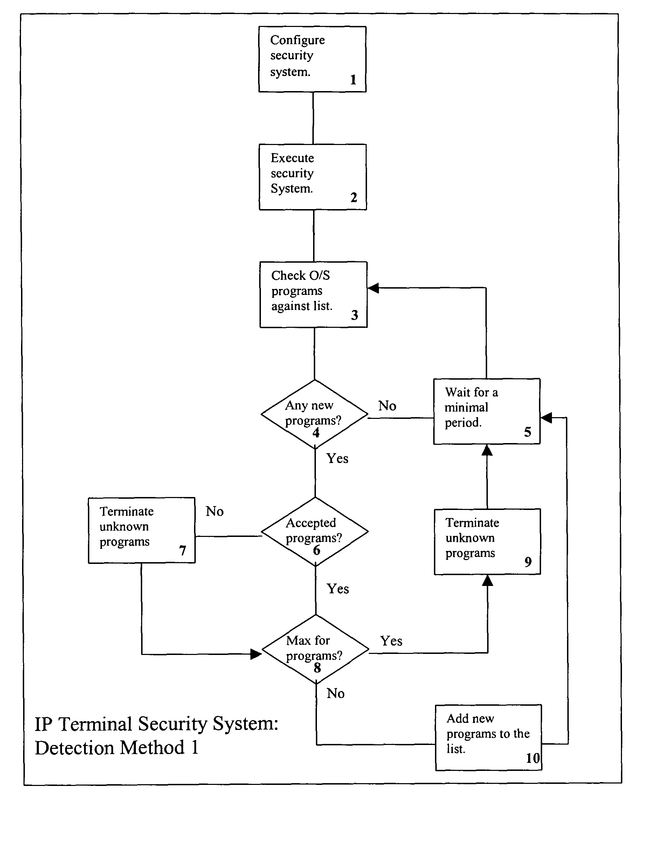

The system for detecting and dealing with new programs could be implemented by one of the following methods:
- Detection method 1: The Terminal Security System reads the Operating Systems list of currently executing programs 104 (A list of executing programs is usually provided by most operating systems. One example is in the well known Microsoft Windows Task Manager). This should provide a name and unique identifier for each program (or process) that is executing. By monitoring this list on a regular basis, it is possible to detect when new programs start. Methods of monitoring the Operating Systems list of executing programs are also well known.
   The following describes this process in more detail with reference to Figure 1:
   1. The system must initially be configured with the names and checksums of programs that can be executed and the number of instances that can be executed. This is the *Accepted Program List* 105.
   2. The Terminal Security System is started. The operating systems list of current programs 104 will be read and all of the programs names and IDs will be stored in a *Current Program List* 106. If any programs are not on the *Accepted Programs List* 105 or have exceeded their maximum count they will be terminated.
   3. The Operating Systems list of current programs 104 will be checked against the *Current Program List* 106.
   4. If any programs in the Operating System list have Process IDs that are not in the *Current Program List* (ie new programs have started) then go to step 6, if not go to step 5.
   5. Wait for a minimal amount of time, before returning to step 3.
   6. The names of all new programs will be checked against the *Accepted Program List* 105. If any are not in the list then go to step 7, otherwise go to step 8.
   7. Terminate the unexpected programs, and then go to step 8.
   8. For any of the new programs that were on the *Accepted Program List* ,check if the maximum count for the program name has been exceeded. If it has then go to step 9 to terminate it, if not then go to step 10.
   9. Terminate the unexpected programs, and then go to step 5.
   10. If any of the new programs had permission to start then add the program name and *Process ID* to the *Current Program List.* Go to step 5.
- Detection Method 2: Each time a new program starts the Operating System could inform the Terminal Security System (ie by an operating system event such as a *signal).* The operating system would need to be modified to provide such a method. The program can then be checked by the Terminal Security System to see if it has permission to execute.

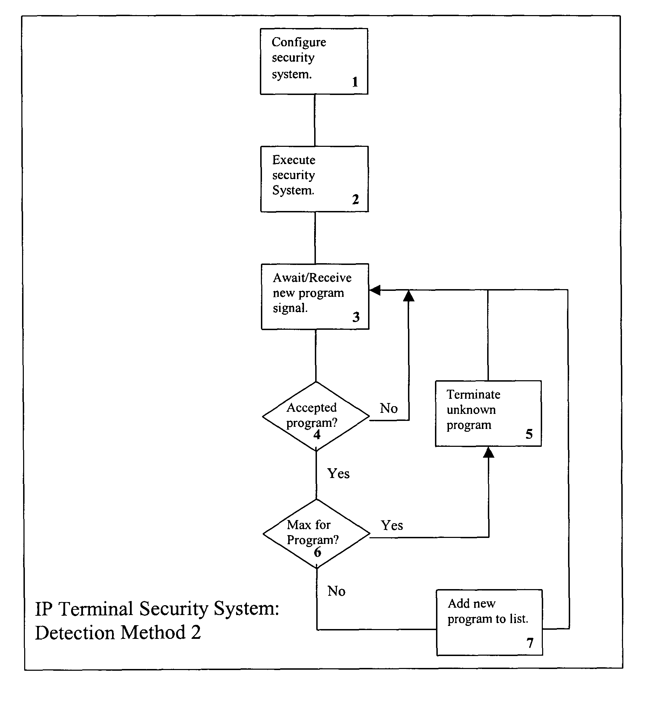

The following describes this process in more detail with reference to Figure 2:
1. The system must initially be configured with the names of programs that can be executed and the number of instances that can be executing at any one time of them. This is the *Accepted Program List 105.*
2. The Terminal Security System is started. The operating systems list of current programs 104 will be checked and all of the program names and Process IDs will be stored in a *Current Program List* 106. If any of the programs are not on the *Accepted Programs List* 105 or have exceeded their maximum count they will be terminated.
3. The application is in an idle state. When a new program is started the Operating System 101 signals the Terminal Security System 102.
4. The name of the new program will be checked against the *Accepted Program List 105.* If it is not in the list then do not allow it to execute and go to step 3, otherwise go to step 6.
5. Terminate the unexpected program, and then go to step 3.
6. If the new program was on the *Accepted Program List,* check if the maximum count for the program name has been exceeded. If it has then go to step 5 to terminate it, if not then go to step 7.
7. If the new program had permission to start then add the program name and Process ID to the *Current Program List.* Go to step 3.

As noted above an additional check may be added to prevent the problem of unwanted code being given an "acceptable" name and ID. For example a prior art security mechanism for validating software can be used in step 4 of both detection methods. Possible security mechanisms include a checksum or a digital signature.

One restriction of the system described to this point is that once the Terminal Security system is operational the *Accepted Program List* cannot be modified. It would be beneficial if there were a facility for dynamically adding/removing programs to/from the *Accepted Program List* whilst the system is operating. This would allow new software to be installed that was considered safe. The method for achieving this would need to be secure.

It is proposed that a secure prior art method such as a digital signature could be used as a method for validating a new program that wishes to be added to or deleted from the *Accepted Program List.* For example, if the program has a valid digital signature it would be added to the *Accepted Program List.* Digital signatures are commonly used on the Internet to validate software that wishes to install itself on a computer.

The following text describes this process in more detail:
- Install Method:
   1. New software is available to be installed. It may come with security credentials, such as a digital signature.
   2. The security mechanism is checked for validity as appropriate. For a digital signature, this involves checking the signature is valid.
   3. The new program is added to the *Accepted Program List* and if to be executed immediately, the *Current program list.*
      N.B. The new program cannot commence until it has been added to the *Accepted Program List.*
- Uninstall Method:
   1. Software is to be uninstalled:
   2. The uninstalled program is removed from the *Accepted Program List*
If any software is uninstalled it could be removed from the *Accepted Program List.*

The method of the invention operates by detecting unexpected programs being executed. This is considered more efficient than the prior art that includes the overhead of checking all incoming data against a list of known signatures.

Two methods for detecting new programs are disclosed. The first involves monitoring the Operating Systems process queue 104. The second involves modification of the operating system 101 to signal an application when a new program is started.

An additional check using a checksum or signature could be used to overcome malicious users renaming processes.

## Claims

1. A method of protecting a computer operating system against operation of unwanted processes comprising:
(a) creating a list of acceptable operating programs for the system including identification data for each acceptable operating program,
(b) detecting the presence of a new program in the operating system,
(c) comparing identification data for the program detected in step (b) with the identification data in the list of acceptable operating programs,
(d) terminating or barring operation of any program not having identification data included in the list of acceptable operating programs.

2. A method as claimed in claim 1 in which step (b) comprises the steps of creating and updating a list of currently operating programs, and repeatedly examining the list of currently operating programs whereby to detect the commencement of operation of a program.

3. A method as claimed in claim 1 or 2 in which a signal is generated in response to the commencement of operation of a program, which triggers the commencement of step (c).

4. A method as claimed in any preceding claim in which for at least one of the acceptable operating programs a number corresponding to a maximum permissible number of copies is stored, and operation of a copy of the program is terminated if the maximum number is exceeded by the operation of that copy.

5. A method as claimed in any preceding claim in which the identification data includes program name and/or process identification.

6. A method as claimed in any preceding claim including storing additional identification data for each acceptable operating system, and terminating or barring operation of any program not having said additional identification data.

7. A method as claimed in claim 6 in which the additional identification data includes a digital signature or checksum.

8. A method as claimed in any preceding claim further comprising steps for adding programs to the list of acceptable operating programs including checking a program to be added for the presence of predetermined security data.

9. A method as claimed in claim 8 in which the predetermined security data is a digital signature.

10. A portable communications terminal provided with means for carrying out the method of any preceding claim.
